**Europäisches Patentamt**

**European Patent Office**

**Office européen des brevets**

(19)

(11) **EP 1 408 210 A1**

(12) **EUROPÄISCHE PATENTANMELDUNG**

(43) Veröffentlichungstag:
**14.04.2004 Patentblatt 2004/16**

(51) Int Cl.[7]: **F02B 1/12**, F02B 19/06,
F02B 19/10

(21) Anmeldenummer: **02022630.4**

(22) Anmeldetag: **09.10.2002**

(84) Benannte Vertragsstaaten:
**AT BE BG CH CY CZ DE DK EE ES FI FR GB GR
IE IT LI LU MC NL PT SE SK TR**
Benannte Erstreckungsstaaten:
**AL LT LV MK RO SI**

(71) Anmelder: **Meinders, Horst, Dipl.-Phys.
72762 Reutlingen (DE)**

(72) Erfinder: **Meinders, Horst, Dipl.-Phys.
72762 Reutlingen (DE)**

Bemerkungen:
Ein Antrag gemäss Regel 88 EPÜ auf Berichtigung
der Beschreibung liegt vor. Über diesen Antrag wird
im Laufe des Verfahrens vor der Prüfungsabteilung
eine Entscheidung getroffen werden (Richtlinien für
die Prüfung im EPA, A-V, 3.).

(54) **Plasmazündung**

(57) Die Erfindung betrifft die Zündung eines Benzin-Luft-Gemisches in einer Brennkraftmaschine mit Hilfe eines Plasmas. Zur Erzeugung dieses Plasmas wird in einer Vorkammer vor dem Brennraum des jeweiligen Zylinders der Brennkraftmaschine ein geringer Teil des Benzin-Luft-Gemisches auf einen sehr hohen Druck (typisch 100 Bar) komprimiert, dabei adiabatisch auf über 800°C, also über die Selbstzündtemperatur des Benzins erhitzt und dabei entflammt. Das entflammte Gas wird über eine s-förmige Kapillare direkt in den Brennraum ins Zentrum einer dort vorher erzeugten Wolke aus einem Benzin-Luft-Gemisch (Schichtladung) injiziert. Hierdurch kommt es bei der Plasmazündung im Gegensatz zur Hochspannungszündung mit Zündkerze zu einer gleichmäßig im Volumen verteilten Entflammung des Benzin-Luft-Gemisches.

Figur 1a

EP 1 408 210 A1

## Beschreibung

Die Erfindung betrifft die Plasmazündung in einer auch als Otto Motor bezeichneten Brennkraftmaschine, welche mit einem Benzin-Luft-Gemisch betrieben wird.

Stand der Technik:

Zum Betrieb von Otto-Motoren müssen Benzin-Luft-Gemische gezündet werden. Das geschieht bisher ausschließlich durch Funken, die beim Abschalten eines Stromes durch die Primärinduktivität einer Zündspule entstehen. Als Schalter dienen hierfür IGBTs oder Zünddarlington, deren Abschaltspannung von der Primärseite auf die Sekundärseite einer Zündspule transformiert wird. Die somit auf der Sekundärseite entstehende Hochspannung verursacht auf der Mittelelektrode einer Zündkerze den gewünschten Funkenüberschlag. Alle alternativen Methoden wie die Zündung mit dem Abgas der vorherigen Verbrennung, oder die Erzeugung eines Plasmas durch Einbringen von Hochfrequenz in die Brennkammer sind wegen der technischen Schwierigkeiten oder wegen der hohen Kosten bisher nicht zur Serienreife gelangt.

Obwohl sich die Zündung mit einem Hochspannungsfunken weltweit durchgesetzt hat, zeigt sie doch auch erhebliche Mängel, die besonders der Entwicklung von Motoren mit reduziertem Kraftstoffverbrauch deutlich im Wege stehen. Der Hauptmangel besteht darin, dass der Zündvorgang nur an einem Punkt, nämlich am Ort der Zündkerze, also zwischen der Mittelelektrode, welche die Hochspannung führt und der Außenelektrode - Massepotential - ausgelöst werden kann. Konstruktionsbedingt müssen sich diese beiden Elektroden wandnah in der Nähe der Zylinderkopfdecke befinden. Gewünscht wird aber eine wandferne Zündung ähnlich der Dieselzündung, bei der durch Selbstzündung eine räumlich verteilte Entflammung des Diesel/Luft-Gemisches mit deutlicher Kraftstoffeinsparung möglich ist.

Weil die Verbrennungsmotoren weltweit mit 40 % am $CO_2$-Ausstoss beteiligt sind, wird eine Motortechnik mit erhöhtem Wirkungsgrad und reduziertem Benzinverbrauch gefordert. Ein richtiger Schritt zur Absenkung des Benzinverbrauches ist die Benzin-Direkteinspritzung (BDE). Hier wird Benzin unter hohem Druck (100-150 Bar) direkt in die Brennkammer injiziert, in der vorher Luft auf etwa 7 Bar komprimiert wurde. Die sich hierbei bildende

Wolke (Schichtladung) mit hohem Kraftstoffüberschuss (niedrigem λ-Wert) kann nur dann gezündet werden, wenn sie sich in der Nähe der Zündkerze befindet. Aufwändige Modellierungen der Kolbenoberfläche dienen unter anderem dazu, die Strömung der Benzinwolke so zu beeinflussen, dass ein Teil davon an den Elektroden der Zündkerze vorbeistreicht. Ohne diese Maßnahme würde es nicht zu einer sicheren Entflammung des Benzin/Luftgemisches kommen.

Der erfindungsgemäße Gedanke:

Die Aufgabe besteht darin, ein Zündsystem zu finden, bei dem der Verbrennungsvorgang des Gasgemisches nicht punktförmig von einer Zündkerze eingeleitet, sondern wie bei der Dieselzündung gleichmäßig im Volumen gestartet wird. Dort wird Luft adiabatisch auf 20 - 24 Bar komprimiert und dabei die Selbstzündtemperatur des eingespritzten Dieselkraftstoffes von 600°C überschritten. Eine Kompression ist adiabatisch, wenn sie so schnell abläuft, dass keine Wärme nach außen abgegeben werden kann. Im PV-Diagramm bewegt man sich auf einer Kurve mit konstanter Entropie (Isentrope), PxV/T = K. Der Otto-Kraftstoff hat mit 800°C eine deutlich höhere Selbstzündtemperatur. Will man auch diesen Kraftstoff durch Selbstzündung entflammen, muss man das Gemisch adiabatisch wesentlich höher als im

Dieselmotor komprimieren. Diese hohen Drukke würden aber im Brennraum zum unkontrollierten Klopfen bis zur Zerstörung des Motors führen. Deswegen wird in dieser Erfindung nicht der gesamte in den Brennraum injizierte Kraftstoff durch adiabatische Kompression entflammt, sondern nur ein kleiner Teil davon in einer Vorkammer mit solch stabilen, dicken Wänden, dass sie dem Entflammungsdruck ohne Zerstörung standhalten können. Anschließend wird das entflammte Gas über eine schwanenhalsförmig gebogene Kapillare direkt in die Mitte der durch Kraftstoffinjektion erzeugten Wolke (Schichtladung) mit hoher Kraftstoffkonzentration injiziert.

Erfindungsgemäß erfolgt die Zündung des Gasgemisches also durch Injektion von heißem, brennenden Gas oder Plasma aus einer Vorkammer direkt in die vorher erzeugte Schichtladung aus einem Benzin/Luftgemisch.

Die Erläuterung des erfindungsgemäßen Gedankens erfolgt anhand der Figuren 1, 2, 3, 4, 5:

Figur 1 beschreibt die Herstellung des Plasmas im Vorkammergehäuse in drei Stadien:

Figur 1a: Einlass von komprimierter Luft (Leitung 3) und Kraftstoff (Leitung 4) in 12 + 13.

Figur 1b: Kompression des Benzin/Luftgemisches auf das Volumen der Brenntasche 12.

Figur 1c: Injektion des Gemisches nach Entflammung in die Brennkammer (Leitung 2).

Figur 2: Druckverlauf in der Vorkammer.

Figur 3: Vorkammergehäuse im Kerzenschacht.

Figur 4: Vorkammergehäuse außerhalb des Kerzenschachtes.

Figur 5: zeitlicher Ablauf der Schaltvorgänge.

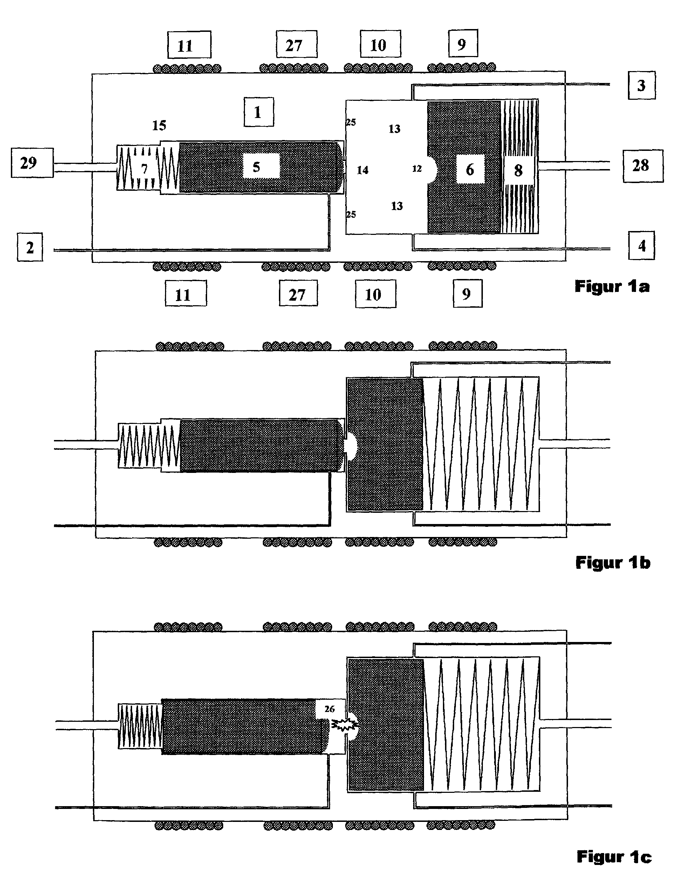

Im Kerzenschacht des Zylinderkopfes oder außerhalb davon befindet sich anstelle einer Zündkerze ein in Figur 1 mit 1 bezeichneter metallischer Körper mit rechteckigem Grundriss, der auch eine zylindrische Form haben kann, der als Gehäuse für die Vorkammer und die Ventilkörper dient und im Folgenden als Vorkammergehäuse bezeichnet wird. Im Inneren des Vorkammergehäuses befinden sich mehrere zylindrische Ausnehmungen zur Aufnahme der Ventilkörper 5 und 6 und der Druckfedern 7 und 8. Die Durchmesser der Ventilkörper 5 + 6 sind im Vergleich zu den jeweiligen Bohrungen im Vorkammergehäuse so toleriert, dass die Ventilkörper zwar beweglich sind, aber trotzdem die Kammern gasdicht abschließen. Die Ventilkörper 5 und 6 bestehen im Inneren aus ferromagnetischem Metall. Mit einem Magnetfeld, welches jeweils durch Stromfluss durch die mit 9, 10, 11, 27 angedeuteten Spulenwindungen erzeugt wird, bewegen sich die Ventilkörper gegen den Druck der Federn 7 + 8 wie bei einem Relais. Bei eingeschaltetem Spulenstrom durch die Spulenwindungen 9 wird der Ventilkörper 6 in das hierdurch erzeugte Magnetfeld gezogen und die Druckfeder 8 mechanisch vorgespannt. Somit sind die Gasleitungen 3 und 4 zur Beladung der Vorkammer 12 + 13 mit Druckluft (3) und Kraftstoff (4) freigegeben. Nach Abschalten des Spulenstromes 9 schnellt der Ventilkörper 6 gegen die Vorkammerwand 25 mit der Öffnung 14, die aber noch mit dem vorderen Schaft des Ventilkörpers 5 verschlossen gehalten wird, weil er durch das Magnetfeld, welches durch den Strom durch Spule 27 erzeugt wird, und die Feder 7 in dieser Position gehalten wird. Hierbei werden die Volumina 12 + 13 auf das Volumen 12 der Brenntasche im Ventilkörper 6 reduziert und der Druck um das Verhältnis (12 + 13)/12 der Volumina so schnell erhöht, dass sich das Gasgemisch durch Selbstentflammung entzündet.

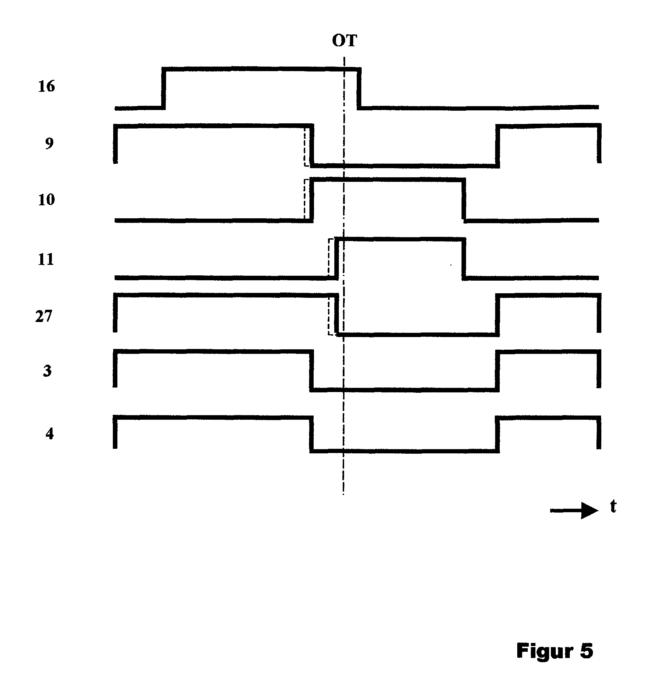

Das beim Relaisschalten bekannte Prellen würde zu einem Hin- und Herschwingen des Ventilkörpers 6 gegen die Wand 25 führen. Um das zu vermeiden, wird der Ventilkörper 6 zusätzlich durch das durch den Stromfluss 10 erzeugte Magnetfeld in die Position an der Trennwand 25 gezwungen und somit das Prellen bedämpft. Der Strom durch die Windungen 10 muss unter Berücksichtigung der Relaisverzögerung zeitlich etwas früher eingeschaltet werden. Dasselbe gilt für das Abschalten des Stromes 27 und das Einschalten des Stromes 11 für die Bewegung des Ventilkörpers 5 gegen den Anschlag 15. Siehe Figur 5.

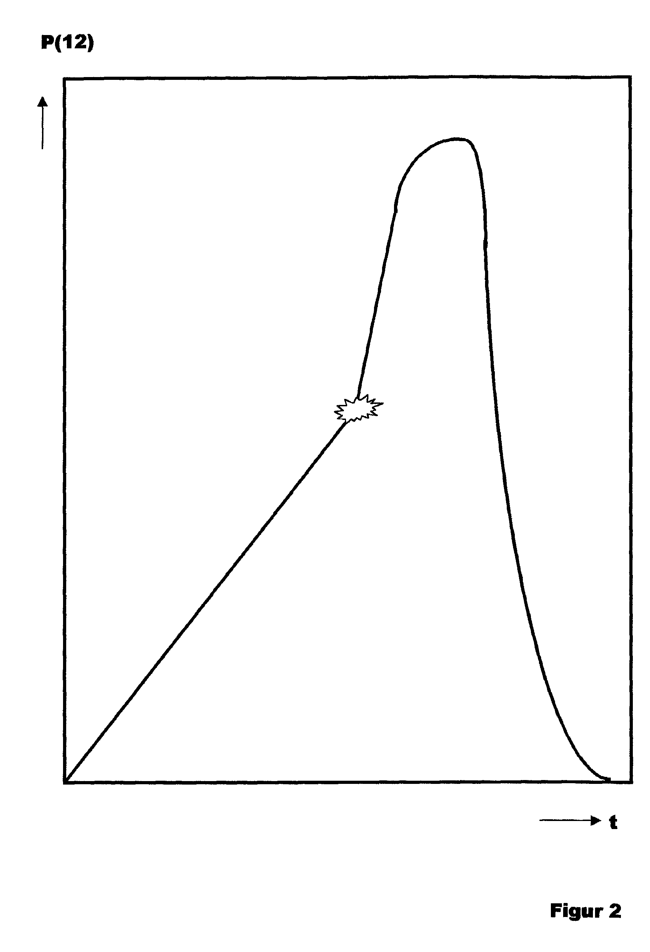

Figur 2 zeigt den prinzipiellen Verlauf des Druckanstieges in den Räumen 12+13 des Vorkammergehäuses. Er verläuft zunächst linear bis zum Zeitpunkt der Selbstentflammung des Gasgemisches. Diese Entflammung führt zwar wegen dem zurückweichenden Ventilkörper 5 (Abschalten von Spulenstrom 27) zu einer Vergrößerung des Brennraumes (12 + 26) und somit zu einer Druckabnahme. Aber bei der Entflammung steigt die Gastemperatur an und es erhöht sich die Zahl der Mole in den Reaktionsprodukten. In Summe steigt somit der Vorkammerdruck nach der Entflammung trotz der Volumenvergrößerung wie in Figur 2 steil an. Das brennende, ionisierte Reaktionsgas fließt über die Kapillare 2 und den Schwanenhals 18 in die Brennkammer des Zylinders. Um zu verhindern, dass bei dem anschließenden Druckabfall der Ventilkörper 5 wieder in seine Ausgangslage zurückschnellt und somit den vollständigen Druckausgleich verhindert, wird dieser in das vom Stromfluss 11 erzeugte Magnetfeld hineingezogen und am Anschlag 15 festgehalten. Wenn sich in der Vorkammer der Druck vollständig abgebaut hat, kann der Stromfluss durch 11 beendet werden.

Anschließend werden die Ventilströme 10 und 11 wieder ausgeschaltet. Durch erneutes Einschalten von Ventilstrom 9 wird der Ventilkörper 6 wieder gegen den Federdruck 8 in seine rechte Position gebracht und durch die Leitungen 3 und 4 wird Druckluft geblasen, um heiße Restgase aus der Vorkammer 12 + 13 zu spülen und die Ventilkörper 5 + 6 und das Vorkammergehäuse 1 abzukühlen. Um zu vermeiden, dass sich die Ventilkörper 5 und 6 bei der Entflammung so stark aufheizen, dass sie durch die thermische Ausdehnung im Gehäuse nicht mehr beweglich sind, sind die Dimensionen dieser zylindrischen Körper so zu wählen, dass der Durchmesser der Brenntasche 12 klein ist gegen den Durchmesser der Ventilkörper 5 und 6. Im konkreten Beispiel wurde in Figur 1 der Brenntaschendurchmesser 12 mit 8 mm und der Durchmesser des Ventilkörpers 6 mit 40 mm gewählt.

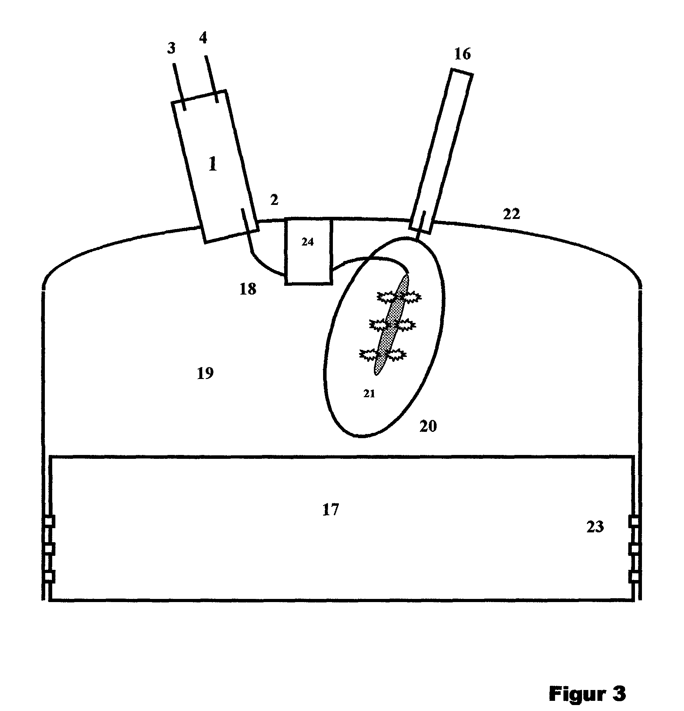

Figur 3 zeigt die erfindungsgemäße Anordnung des Brennraumes 19 in einer mit Benzin betriebenen Brennkraftmaschine. Es handelt sich um eine prinzipielle Darstellung, in der nur die für die Funktion des Erfindungsgedankens relevanten Komponenten aufgeführt sind. Der bewegliche Kolben 17 mit den Kolbenringen 23 stellt die untere Abgrenzung des Brennraumes 19 dar. In der Decke des Zylinderkopfes 22 befindet sich an der ursprünglich für die Zündkerze vorgesehenen Position (Kerzenschacht) das Vorkammergehäuse 1 mit der Vorkammer und den Gaszuführungen für Druckluft 3, Kraftstoff 4 und die Kapillare 2 mit dem sich daran anschließenden Schwanenhals 18. Durch den s-förmigen Schwanenhals fließt das Plasma 21 direkt in die Mitte der vom Einspritzventil 16 hergestellten Ladungswolke 20. Mit der Halterung 24 wird der Schwanenhals 18 unter der Zylinderkopfdecke 22 befestigt. Bei der Montage des Vorkammergehäuses 1 wird die Verbindung zwischen der Kapillare 2 und dem Schwanenhals 18 durch einen Druckverschluss hergestellt, der Stand der Technik und nicht Gegenstand dieser Erfindung ist. Das Vorkammergehäuse 1 hat kein Gewinde zum Einschrauben in den Kerzenschacht. Vielmehr wird er in den Kerzenschacht eingesteckt und anschließend mit einem hier nicht dargestellten Befestigungsring auf der Seite der Gaszuführungen 3 und 4 angedrückt und die Verbindung zwischen Schwanenhals 18 und Kapillare 2 abgedichtet.

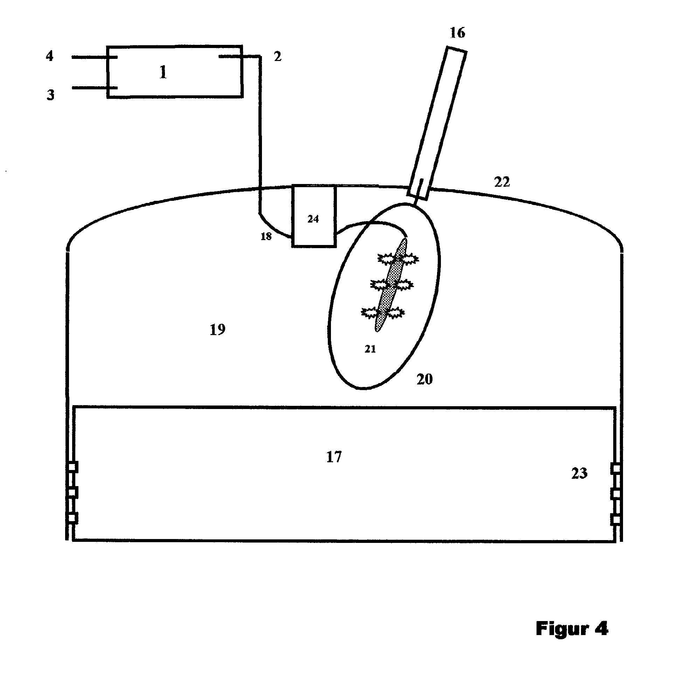

In einer weiteren vorteilhaften Ausgestaltung des Erfindungsgedankens befindet sich das Vorkammergehäuse 1 nicht wie in Figur 3 im ursprünglichen Kerzenschacht, sondern außerhalb davon, wie in Figur 4 gezeigt. Mit dieser Variante kann vermieden werden, dass sich das Vorkammergehäuse im Kerzenschacht besonders auf der Brennraumseite zu stark aufheizt. Die Druckfedern 7 und 8 müssen vor zu starker Erwärmung geschützt werden, weil sie sonst ihre Elastizität verlieren. Dasselbe gilt für die Ventilkörper 5 und 6, bei denen der Ferromagnetismus oberhalb von 180°C (Curie Temperatur) verschwindet. Bei dieser Variante verlängert sich die Kapillare 2 um den Abstand zwischen Zylinderkopfdecke und dem Ausgang 2 des Vorkammergehäuses von 10 cm auf ca. 20 cm.

Strömungsgeschwindigkeit U, Zündversatz $\Delta t_{Zünd}$, Brenndauer $t_{Br}$:

Zur Abschätzung dieser Größen werden folgende Annahmen gemacht:

1. Für das Benzin/Luftgemisch wird bei 800°C angenähert mit der Viskosität von Luft gerechnet. η (800°C) $\cong$ 310 x $10^{-6}$ g/s²cm. Die Viskosität ist bei Gasen unabhängig vom Druck, solange die freie Weglänge kleiner als die Kapillardimensionen ist. Das ist bei den hier vorliegenden Druckverhältnissen immer der Fall. Die Viskosität der Gase nimmt im Gegensatz zu den Flüssigkeiten mit der Temperatur zu.

2. Der Druckunterschied zwischen den Kapillarenden zum Zeitpunkt der Zündung in der Vorkammer ergibt sich aus dem Volumenverhältnis (12+13)/12. Er wird mit 100 Bar angenommen. $\Delta P$ = 100 x $10^6$ g/s²cm. Dieser Druck verändert sich zeitlich entsprechend der Kurve in Figur 2. $\Delta P$ bezieht sich auf den Druck in der Brennkammer, der zum Zündzeitpunkt etwa 7 Bar beträgt. Dieser Druck müsste von den 100 Bar abgezogen werden, er blieb aber bei dieser Abschätzung unberücksichtigt.

3. Kapillarlänge: L =10 cm für die Variante in Figur 3, L =20 cm für die Variante in Figur 4.

4. Innerer Radius der Kapillare bei einer angenommenen Querschnittsfläche von 1 mm² $\Rightarrow$ R²=1/π x $10^{-2}$ cm².

Die Strömungsgeschwindigkeit U durch die Kapillare kann mit Hilfe der Gleichung von Hagen-Poiseuille bestimmt werden:

$$U = \frac{\pi R^4 \Delta P}{8 \eta L} \qquad (1)$$

Der Zündversatz $\Delta t_{Zünd}$ ist im Gegensatz zu dem in der Literatur bekannten Zündverzug die Durchströmzeit durch die Kapillare zu Beginn der Zündung in der Vorkammer. Zu diesem Zeitpunkt herrscht in der Vorkammer der sich aus dem Volumenverhältnis (12+13)/12 ergebende Kompressionsdruck von 100 Bar. Mit dem Volumen der Kapillare V = L π R² und der Strömungsgeschwindigkeit zu Beginn der Kapillaröffnung kann somit $\Delta t_{Zünd}$ bestimmt werden:

$$\Delta t_{Zünd} = V/U = \frac{8 L^2 \eta}{R^2 \Delta P} \qquad (2)$$

Die Brenndauer $t_{Br}$ ist der Zeitraum für den vollständigen Abbau des Druckunterschiedes zwischen Vorkammer und Brennraum. Er hängt vom zeitlich gemittelten Druckverhältnis $P_m/P_{Br}$ zwischen Vorkammer (12+26) und Brennraum 19, vom Volumen der Vorkammer $V_{vor}$, und vom Strömungswiderstand der Kapillare zwischen Vorkammer und Brennraum ab.

$$t_{Br} = \frac{V_{vor} \, P_m}{U_m \, P_{Br}} \qquad (3)$$

$V_{vor}$ (12 + 26) Figur 1c, besteht aus dem Volumen der Brenntasche 12 + dem Volumen 26 zwischen Ventilkörper 5 und Trennwand 25, nachdem der Ventilkörper 5 nach Zündung in der Vorkammer gegen den Anschlag 15 gedrückt wurde. Zur Abschätzung wird das Vorkammervolumen mit $V_{vor}$= 1 cm³ angenommen. Für das im zeitlichen Mittel vom Zeitpunkt der Entflammung bis zum Ende der Plasmaströmung in der Vorkammer vorliegende Druckverhältnis $P_m/P_{Br}$ wird laut Figur 2 mit $P_m$ = 100 Bar (angenähert konstant angenommener Druck von der Entflammung bis zum Ende des Brennvorganges) und mit $P_{Br}$ = 7 Bar (Druck bei der Zündung im Brennraum) das Verhältnis 100/7 angenommen. Die mittlere Strömungsgeschwindigkeit $U_m$ in der Kapillare hängt vom Strömungswiderstand in der Kapillare, also von deren Länge und Durchmesser nach der Hagen-Poiseuilleschen Gleichung ab und von dem im zeitlichen Mittel anliegenden Druckunterschied zwischen den Kapillarenden ab. Die Strömungsgeschwindigkeit beträgt für L=10cm (Figur 3) 12.8 l/s und für L=20 cm (Figur 4) 6.4 l/s.

In der folgenden Tabelle sind die drei für die Zündung relevanten Parameter für die in den Figuren 3 und 4 beschriebenen Versionen zusammengestellt:

|  | L = 10 cm | L = 20 cm |
|---|---|---|
| U | 12.8 l/s | 6.4 l/s |
| $\Delta t_{Zünd}$ | 0.78 µs | 3.12 µs |
| $t_{Br}$ | 1.12 ms | 2.23 ms |

Kommentare zu dieser Zusammenstellung:

1. Der Zündversatz $\Delta t_{Zünd}$ ist nicht zu verwechseln mit dem in der Literatur definierten Zündverzug, der als Zeitspanne zwischen dem Auftreten des Zündfunkens und dem Beginn des Druckanstiegs im Brennraum auf Grund der Entflammung definiert ist. Er beträgt etwa 1 ms und nimmt mit zunehmender Kompression und Temperatur des Benzin-Luft-Gemisches ab. In dieser Anmeldung wird als Zündversatz die Zeit für den Transport des Plasmas in den Brennraum zu Beginn der Zündung in der Vorkammer definiert.

2. Der Zündversatz $\Delta t_{Zünd}$ liegt im Bereich von Mikrosekunden und ist deutlich kürzer als die Speicherzeiten der für die Hochspannungs-Zündung verwendeten Zünddarlington oder Zünd-IGBT. Diese liegen je nach Schaltzustand im Bereich von 10 bis 40 µs mit einem positiven Temperaturkoeffizienten.

3. Der Zündversatz $\Delta t_{Zünd}$ ist deutlich geringer als die durch Rekombination der Ionen begrenzte Lebensdauer. Sie liegt im Bereich von 100 µs. Durch den Transport des brennenden Gases durch die Kapillare kommt es also zu keinem merklichen Verlust an Ionen.

4. Das Plasma kühlt sich in der Kapillare ab. $\Rightarrow$ Die Viskosität reduziert sich auf einen Wert zwischen 0°C (171 x $10^{-6}$ P) und 800°C (310 x $10^{-6}$ P). $\Rightarrow$ $\Delta t_{Zünd}$ reduziert sich auf noch kleinere Werte als abgeschätzt.

5. Die Zündung im Brennraum wird nur durch die aus der Vorkammer importierten Ionen eingeleitet. Die Temperaturabnahme des Plasmas auf dem Weg durch die Kapillare wirkt sich nicht negativ auf den Zündvorgang aus, weil die Zündung nicht durch die Temperatur des Plasmas sondern nur durch den ionisierten Zustand der Gasatome eingeleitet wird.

6. Die Brenndauern $t_{Br}$ der Plasmazündung sind größer als bei der elektronischen Zündung. Sie wurden hier nur abgeschätzt. Für eine genauere Berechnung müssen die zeitabhängigen Funktionen der drei Parameter $P_m(t)$, $P_{Br}(t)$, $U(t)$ bekannt sein.

7. Die Brenndauer der Plasmazündung kann mit geringem Aufwand durch Reduktion des Kapillardurchmessers verlängert werden. Diese Maßnahme ist sehr wirkungsvoll, weil die Strömungsgeschwindigkeit U reziprok in die Brenndauer eingeht (Gleichung 3), diese sich aber mit der 4. Potenz des Kapillardurchmessers verringert (Gleichung 1). Im Gegensatz dazu ist eine Brenndauerverlängerung bei der elektronischen Zündung nur durch Erhöhung des Primärstromes in der Zündspule möglich. Das ist nicht sehr effektiv, weil in der Zündspule ohnehin nur ein geringer Teil der primärseitig geladenen Energie für das Funkenbrennen genutzt werden kann. Die größte Teil der Energie geht hier durch induktive Streuverluste verloren. Mit ansteigendem Primärstrom erhöhen sich diese Verluste beim Energieumsatz von der Primär- auf die Sekundärseite. Hohe Primärströme haben zudem fatale Folgen für die Zuverlässigkeit und für das Ausfallverhalten von Zündspulen und Zünddarlington besonders im Betrieb bei hohen Temperaturen.

<u>Übersicht über die Schaltvorgänge im Brennraum und in der Vorkammer: Figur 5</u>

Ventil 16 injiziert die Benzinwolke (Schichtladung) in die Brennkammer. Diese Injektion erfolgt vor OT (oberer Totpunkt) und wird nach OT beendet. Während dieser Zeit fließt Strom durch die Spule 9 des Vorkammergehäuses. Hierdurch wird die Druckfeder 8 mechanisch vorgespannt. Das Ende des Stromflusses wird durch die gestrichelte Kurve vor der abfallenden Flanke markiert. Der Zeitverzug zwischen gestrichelter Kurve und abfallender Flanke ist die Schaltverzugszeit des Ventilkörpers 6. Sie erklärt sich mit dem Abbau des Magnetfeldes und der Zeit bis sich der Ventilkörper zur Kammerwand 25 bewegt hat. Diese Zeit hängt von der Konstruktion des Ventilkörpers ab und liegt typisch bei 10-20 µs. Aus demselben Grund muss der Strom durch die Spule 10 zur Vermeidung des Ventilprellens vor dem erforderlichen Zeitpunkt - bis der Ventilkörper gegen die Wand 25 fährt - eingeschaltet werden. Beide Schaltflanken (die abfallende von der Spule 9 und die ansteigende der Spule 10) müssen vor OT liegen, damit der Zündvorgang im Brennraum 19 noch vor OT eingeleitet wird. Zum Festhalten des Ventilkörpers 5 bei der abfallenden Druckflanke (Figur 2) muss auch der Strom durch die Spule 11 früher eingeschaltet werden, damit sich das Magnetfeld rechtzeitig aufbauen kann. Die Flanken der Gasleitungen 3 und 4 zeigen vor OT die Beladung der Vorkammer mit Luft bzw. mit Kraftstoff und nach OT (nach Ablauf der Brennzeit) den Spülvorgang zum Ausräumen nicht verbrannter Gasreste und zur Abkühlung der Ventilkörper und des Vorkammergehäuses.

<u>Kraftstoffverbrauch in der Vorkammer:</u>

Bei der Plasmazündung wird im %-Bereich Kraftstoff für die Zündung in der Vorkammer abgezweigt. Dieser Kraftstoff steht dem Motor zur Umsetzung von thermischer in mechanische Energie nicht zur Verfügung. Hierdurch verschlechtert sich somit der Wirkungsgrad des Motors. Dafür entfallen aber alle Energieverluste der Zündkomponenten: Zünddarlington, Zündspule und Zündkerze, die über das Bordnetz aus dem Generator und somit aus dem Motor gespeist werden.

<u>Kraftstoffzuführung und Dosierung für die Vorkammer:</u>

Der Kraftstoff kann alternativ mit Hilfe eines weiteren Einspritzventils zugeführt werden, welches speziell für die Injektion kleiner Kraftstoffmengen ausgelegt ist. Alternativ kann auch Druckluft nach dem Vergaserprinzip über den Kraftstoff geleitet und damit beladen werden.

**Übersicht über die verwendeten Nummern (Plasmazündung)**

1. Brennkammergehäuse
2. Kapillare am Ausgang des Brennkammergehäuses
3. Einlass für komprimierte Luft
4. Einlass für Kraftstoff und Spülleitung für Luft
5. Ventilkörper
6. Ventilkörper
7. Druckfeder
8. Druckfeder
9. Spule zum Komprimieren der Druckfeder 8
10. Spule zur Vermeidung des Prellens von Ventilkörper 6
11. Spule zum Zurückhalten des Ventilkörpers 5 in der abfallenden Druckflanke
12. Brenntasche im Ventilkörper 6
13. Gasraum vor dem Ventilkörper 6 vor der Kompression
14. Öffnung in der Trennwand 25
15. Anschlag für den Ventilkörper 5
16. Ventil zum Einspritzen des Kraftstoffes in den Brennraum 19
17. Kolben
18. S-förmig gebogene Kapillare (Schwanenhals) im Brennraum 19
19. Brennraum
20. Eingespritzte Kraftstoffwolke im Brennraum (Schichtladung)
21. Eingespritzte Plasmawolke in der Schichtladung
22. Zylinderkopfdecke
23. Kolbenringe
24. Halterung für den Schwanenhals
25. Trennwand zwischen Ventilkörper 5 und 6
26. Brennraum vor dem Ventilkörper 5
27. Spule zum Festhalten des Ventilkörpers 5 in der ansteigenden Druckflanke
28. Ölleitung für die Feder 8 in der Federkammer
29. Ölleitung für die Feder 7 in der Federkammer

**Patentansprüche**

1. Zündung eines Benzin-Luft-Gemisches in einer Brennkraftmaschine mit Hilfe eines aus brennenden, heißen Reaktionsprodukten und Ionen bestehenden Gases, im Folgenden kurz als Plasma bezeichnet, **dadurch gekennzeichnet, dass** das Plasma in einer Vorkammer neben dem Brennraum des jeweiligen Zylinders der Brennkraftmaschine erzeugt wird, in der ein geringer Teil des Benzin-Luft-Gemisches adiabatisch, d.h. schnell auf einen hohen Druck von typisch 100 Bar komprimiert wird, dass keine Wärmeabfuhr zu den umgebenden Vorkammerwänden erfolgen kann, und dass dabei die Temperatur des Benzin-Luft-Gemisches über die Selbstzündtemperatur von Benzin von typisch 800°C ansteigt, sodass sich das Benzin-Luft-Gemisch in der Vorkammer unter Bildung von Plasma entflammt und dass dieses Plasma bei hohem Druck durch eine Kapillare direkt in den Brennraum des Zylinders in das dort vorher eingespritzte Benzin-Luft-Gemisch injiziert wird und dieses entflammt.

2. Zündung eines Benzin-Luft-Gemisches mit Hilfe eines Plasmas nach Anspruch 1, **dadurch gekennzeichnet, dass** das Plasma in einem Gehäuse 1 erzeugt wird, in dem sich vier Bohrungen zur Aufnahme von zwei Ventilkörpern 5+6, die im Inneren teilweise aus ferromagnetischem Metall bestehen und den dazu gehörenden Druckfedern 7 + 8 befinden, dass Gasleitungen 2, 3, 4 in das Innere dieses Gehäuses führen, dass Ölleitungen 28, 29 in die Bohrungen für die Druckfedern 7 + 8 führen und dass sich vier elektrisch von einander entkoppelte Spulen 9, 10, 11, 27 außen auf dem Vorkammergehäuse mit folgenden Funktionen befinden:

Spule 9: bei Stromfluss durch Spule 9 wird der Ventilkörper 6 gegen die Druckfeder 8 gedrückt und spannt sie vor, somit entsteht vor dem Ventilkörper 6 das Vorkammervolumen 13 und es wird die Gasanleitung 3 zum Einlass von komprimierter Luft und die Gasleitung 4 zum Einlass von Kraftstoff oder mit Kraftstoff beladener Luft freigegeben,
Spule 10: nach Abschalten des Stromes durch Spule 9 und Stromfluss durch Spule 10 wird der Ventilkörper 6 unter Vermeidung von Ventilprellen gegen die Trennwand 25 gedrückt, das Vorkammervolumen 13 wird auf das Volumen der im vorderen Schaft des Ventilkörpers 6 vorhandenen Brenntasche 12 reduziert, das eingeschlossene Gasgemisch aus Luft und Kraftstoff wird adiabatisch komprimiert, entflammt sich und es entsteht ein Plasma,
Spule 27: bei Stromfluss durch Spule 27 wird der Ventilkörper 5 mit seinem vorderen Schaft gegen die Öffnung 14 in der Trennwand 25 zwischen den beiden Kammern 13 und 26 gedrückt, verschließt diese und verhindert bei der Kompression des Volumens der Vorkammer 13 einen vorzeitigen Druckabfall,
Spule 11: nach Abschalten von Spule 27 und Stromfluss durch Spule 11 wird der Ventilkörper 5 unter Kompression der Druckfeder 7 gegen den Anschlag 15 gedrückt, die Vorkammer 26 und die Kapillare 2 und die Verbindung zur Vorkammer 12 über die Öffnung 14 wird freigegeben und das Plasma kann durch die Kapillare 2 bis zum vollständigen Druckausgleich der Vorkammer 26 abfließen.

**3.** Zündung eines Benzin-Luft-Gemisches mit Hilfe eines Plasmas nach Anspruch 1 und 2, **dadurch gekennzeichnet, dass** die Ventilkörper 5 und 6 abgesehen von der Vorderseite die Formen von axialsymmetrischen Zylindern haben, wobei die Unterschiede der Außendurchmesser dieser Zylinder im Vergleich zu den Innendurchmessern der jeweiligen Bohrungen im Gehäuse 1 so gering sind, dass die Ventilkörper in den Bohrungen zwar beweglich sind, dass sie aber die von den Ventilkörpern gebildeten Kammern gasdicht abschließen.

**4.** Zündung eines Benzin-Luft-Gemisches mit Hilfe eines Plasmas nach Anspruch 1 und 2, **dadurch gekennzeichnet, dass** der Durchmesser des Ventilkörpers 6 groß ist im Vergleich zum Durchmesser der auf seiner Stirnseite vorhandenen beispielsweise halbkugelförmigen Brenntasche 12, im konkreten Beispiel 8 mm für den Brenntaschendurchmesser und 40 mm für den Außendurchmesser des Ventilkörpers 6, damit die in der Umgebung der Brenntasche entstehende erwärmungsbedingte Ausdehnung die Beweglichkeit des Ventilkörpers in der Bohrung nicht beeinträchtigt.

**5.** Zündung eines Benzin-Luft-Gemisches mit Hilfe eines Plasmas nach Anspruch 1 und 2, **dadurch gekennzeichnet, dass** im Gehäuse 1 Mittel zur Vermeidung des Verschweißens der Gleitflächen der Ventilkörper an ihrer äußeren Oberfläche mit den inneren Bohrungen im Gehäuse 1 bei hohen Temperaturen vorgesehen sind, welche auch zur Kühlung und zur Abdichtung derselben dienen und dass diese Mittel vorzugsweise aus Gleit- oder Schmieröl bestehen, welche auch im Kurbelwellengehäuse der Brennkraftmaschine verwendet werden und das dieses Gleit- oder Schmieröl in die Bohrungen zur Aufnahme der Druckfedern 7 und 8 über die in den Figuren 1a,b,c dargestellten Ölleitungen 28, 29 in das Vorkammergehäuse eingebracht wird und diese Bohrungen abgesehen von den Druckfedern vollständig ausfüllt.

**6.** Zündung eines Benzin-Luft-Gemisches mit Hilfe eines Plasmas nach Anspruch 1 , 2 und 5, **dadurch gekennzeichnet, dass** das Gehäuse 1 an der Zylinderkopfdecke an der Stelle des dort bisher vorhandenen Kerzenschachtes untergebracht ist und dass dieses Gehäuse im Unterschied zur Zündkerze in den Kerzenschacht eingesteckt und mit Hilfe eines Befestigungsringes auf der Seite, an der sich die Ventilausgänge 3 und 4 befinden, so festgezogen wird, dass sich gleichzeitig eine druckfeste Verbindung zwischen dem Ausgang 2 für das Plasma und der schwanenhalsförmigen Kapillarleitung 18 ergibt.

**7.** Zündung eines Benzin-Luft-Gemisches mit Hilfe eines Plasmas nach Anspruch 1 und 2, **dadurch gekennzeichnet, dass** das Gehäuse 1 zur Vermeidung einer zu großen Erwärmung nicht im Kerzenschacht, sondern außerhalb davon untergebracht wird.

**8.** Zündung eines Benzin-Luft-Gemisches mit Hilfe eines Plasmas nach Anspruch 1 und 2, **dadurch gekennzeichnet, dass** die Kapillarleitung 18, die das im Gehäuse 1 hergestellte Plasma in den Brennraum 19 der Brennkraftmaschine leitet, an einer Halterung 24 an der Zylinderkopfdecke befestigt ist, und dass sie s-förmig, also wie ein Schwanenhals geformt ist, so dass sich der Ausgang dieser Kapillarleitung im Zentrum einer vom Einspritzventil 16 erzeugten Schichtladung 20 aus eingespritztem Kraftstoff-Luft-Gemisch befindet, und dass die Einspritzrichtung des Plasmas 21 mit der Einspritzrichtung der Schichtladung 20 übereinstimmt.

**9.** Zündung eines Benzin-Luft-Gemisches mit Hilfe eines Plasmas nach Anspruch 1 und 2, **dadurch gekennzeichnet, dass** die Leitungsdimensionen der Kapillaren 2 und 18 so gewählt werden, dass die Brenndauer, also die Einspritzzeit des Plasmas den Bedingungen für eine optimale Verbrennung durch Wahl des Kapillardurchmessers angepasst werden kann, weil die Brenndauer sehr empfindlich d.h. mit der 4. Potenz vom Durchmesser der Kapillare abhängt und dass insbesondere der Leitungsquerschnitt typisch 1 $mm^2$ beträgt und die Summe der Länge der Kapillarleitungen typisch 10 cm bzw. 20 cm betragen.

**10.** Zündung eines Benzin-Luft-Gemisches mit Hilfe eines Plasmas nach Anspruch 1 und 2, **dadurch gekennzeichnet, dass** der Kraftstoff für die Vorkammer 12 + 13 über die Leitung 4 mit Hilfe eines Einspritzventils zugeführt wird.

**11.** Zündung eines Benzin-Luft-Gemisches mit Hilfe eines Plasmas nach Anspruch 1 und 2, **dadurch gekennzeichnet, dass** nach dem Vergaserprinzip Druckluft über den Kraftstoff geleitet, damit beladen und diese über die Leitung 4 der Vorkammer 12 + 13 zugeführt wird.

Figur 1a

Figur 1b

Figur 1c

**P(12)**

**Figur 2**

**Figur 3**

**Figur 4**

**Figur 5**

**Europäisches Patentamt**

# EUROPÄISCHER RECHERCHENBERICHT

Nummer der Anmeldung

EP 02 02 2630

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 2 148 458 A (GRAHMAN FREDERICK P)<br>28. Februar 1939 (1939-02-28)<br>* das ganze Dokument *<br>--- | 1 | F02B1/12<br>F02B19/06<br>F02B19/10 |
| A | US 1 496 489 A (POWELL ALVAH L)<br>3. Juni 1924 (1924-06-03)<br>* Seite 1, Zeile 9 - Zeile 83; Abbildungen *<br>--- | 1 | |
| A | FR 501 559 A (SANCIAUME CLAUDIUS)<br>17. April 1920 (1920-04-17)<br>* das ganze Dokument *<br>--- | 1 | |
| A | FR 634 984 A (PEREIRA MAURICIO RODRIGUES)<br>3. März 1928 (1928-03-03)<br>* Seite 1, Zeile 10 - Seite 2, Zeile 104; Abbildung *<br>--- | 1 | |
| A | DE 256 591 C (ZIMMERMANN)<br>* das ganze Dokument *<br>----- | 1 | RECHERCHIERTE SACHGEBIETE (Int.Cl.7)<br><br>F02B |

Der vorliegende Recherchenbericht wurde für alle Patentansprüche erstellt

| Recherchenort | Abschlußdatum der Recherche | Prüfer |
|---|---|---|
| DEN HAAG | 29. Januar 2003 | von Arx, H |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 02 02 2630

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-01-2003

| Im Recherchenbericht angeführtes Patentdokument | | Datum der Veröffentlichung | Mitglied(er) der Patentfamilie | Datum der Veröffentlichung |
|---|---|---|---|---|
| US 2148458 | A | 28-02-1939 | KEINE | |
| US 1496489 | A | 03-06-1924 | KEINE | |
| FR 501559 | A | 17-04-1920 | KEINE | |
| FR 634984 | A | 03-03-1928 | KEINE | |
| DE 256591 | C | | KEINE | |

Für nähere Einzelheiten zu diesem Anhang : siehe Amtsblatt des Europäischen Patentamts, Nr.12/82